# EUROPEAN PATENT APPLICATION

(11) **EP 4 692 200 A1**
(43) Date of publication of application: **11.02.2026**
(21) Application number: 24779763.2
(22) Date of filing: 19.03.2024
(51) Int. Cl.: C08L 9/00, B60C 1/00, C08K 3/22, C08K 3/36, C08K 5/548, C08L 61/14

(54) **TIRE RUBBER COMPOSITION, AND TIRE**

(30) Priority: 27.03.2023 JP 2023050367
(71) Applicant: The Yokohama Rubber Co., Ltd., Hiratsuka-shi, Kanagawa 254-8601 (JP)
(72) Inventor: HIJIKATA, Kensuke, Hiratsuka-shi, Kanagawa 254-8601 (JP)
(74) Representative: Grünecker Patent- und Rechtsanwälte PartG mbB
(86) International application number: PCT/JP2024/010801
(87) International publication number: WO 2024/203638

(57) **Abstract**

A tire rubber composition of the present invention is produced by blending from 1 to 60 parts by mass of a rosin-modified phenolic resin having an acid value of less than 30 mg KOH/g and from 30 to 300 parts by mass of silica having a nitrogen adsorption specific surface area of 100 to 300 m²/g, with 100 parts by mass of a diene rubber.

## Description

### Technical Field

The present invention relates to a tire rubber composition and a tire containing the tire rubber composition, and particularly relates to a tire rubber composition that enhances wet grip performance, warm-up performance (grip performance at low temperatures), and strength at break and exhibits excellent processability, and a tire using the tire rubber composition.

### Background Art

In general, various performances are required for a tire. Among these performances, a tire is required to maintain high levels of grip performance and wear resistance.

On the other hand, a tire for traveling on a dry road surface and a tire for traveling on a wet road surface are prepared as pneumatic tires for racing, and an optimal tire for each of these tires is selected according to the weather and road surface state at the time of traveling. Here, the racing tire for traveling on a wet road surface contains a large amount of a filler having a high specific surface area and/or a resin having a high softening point (high-softening-point resin) to enhance wet grip performance.

However, when a filler having a high specific surface area is blended in a large amount, strength at break decreases, which leads to a deterioration in wear resistance. Furthermore, when a high-softening-point resin is blended in a large amount, unfortunately, low-temperature hardness increases and actuating property decreases, and warm-up performance deteriorates.

Note that, Patent Document 1 listed below describes a tire rubber composition produced by blending from 75 to 200 parts by mass of silica having a CTAB specific surface area of 100 to 400 m²/g; and from 5 to 50 parts by mass of a terpene phenolic resin having an acid value of 30 mg KOH/g or more and a hydroxyl value of 5 mg KOH/g or more, with 100 parts by mass of a diene rubber containing a styrene-butadiene copolymer rubber having a glass transition temperature (Tg) of -20°C or higher. However, a rosin-modified phenolic resin having an acid value of less than 30 mg KOH/g described below is not described or suggested.

Furthermore, for the tire rubber composition described in Patent Document 1 listed below, improvement of the processability has been demanded because the rubber composition tends to adhere to a roll when kneading is performed by, for example, an open roll after a vulcanizing agent, a vulcanization accelerator, and the like are added.

### Citation List

### Patent Literature

Patent Document 1: JP 6791278 B

### Summary of Invention

### Technical Problem

Therefore, an object of the present invention is to provide a tire rubber composition that enhances wet grip performance, warm-up performance, and strength at break and that exhibits excellent processability, and a tire using the tire rubber composition.

### Solution to Problem

As a result of diligent research, the inventors of the present invention found that the object described above can be achieved by blending a certain amount of a rosin-modified phenolic resin having an acid value in a specific range and silica having a nitrogen adsorption specific surface area (N₂SA) in a specific range into a diene rubber, and thus completed the present invention.

That is, the present invention provides a tire rubber composition containing: a diene rubber; from 1 to 60 parts by mass of a rosin-modified phenolic resin having an acid value of less than 30 mg KOH/g with respect to 100 parts by mass of the diene rubber; and from 30 to 300 parts by mass of silica having a nitrogen adsorption specific surface area (N₂SA) of 100 to 300 m²/g with respect to 100 parts by mass of the diene rubber.

### Advantageous Effects of Invention

Because the tire rubber composition of an embodiment of the present invention is produced by blending from 1 to 60 parts by mass of a rosin-modified phenolic resin having an acid value of less than 30 mg KOH/g and from 30 to 300 parts by mass of silica having a nitrogen adsorption specific surface area (N₂SA) of 100 to 300 m²/g with 100 parts by mass of a diene rubber, the tire rubber composition that enhances wet grip performance, warm-up performance, and strength at break and that exhibits excellent processability, and a tire using the tire rubber composition can be provided.

It is presumed that the rosin-modified phenolic resin used in an embodiment of the present invention has excellent miscibility with the diene rubber, adequately exhibits functions of an alkaline component (e.g., a vulcanization accelerator) in the rubber composition due to the low acid value, improves wet grip performance, warm-up performance, and strength at break, and reduces carboxyl groups having an adhering action to a metal surface, and thus processability can be also enhanced.

### Description of Embodiments

The present invention will be described in further detail below.

### Diene Rubber

Any diene rubber that can be compounded in ordinary rubber compositions may be used as the diene rubber used in an embodiment of the present invention. Examples thereof include natural rubber (NR), isoprene rubber (IR), butadiene rubber (BR), styrene-butadiene copolymer rubber (SBR), and acrylonitrile-butadiene copolymer rubber (NBR). These may be used alone, or two or more may be used in combination. Furthermore, the molecular weight and the microstructure thereof are not particularly limited. The diene rubber may be terminal-modified with an amine, amide, silyl, alkoxysilyl, carboxyl, or hydroxyl group or may be epoxidized.

Among these diene rubbers, from the perspective of effectiveness of the present invention, the diene rubber is preferably an SBR. For example, in a case of a racing application, the blended amount of the SBR can be preferably 80 parts by mass or more, and more preferably 100 parts by mass or more.

### Rosin-Modified Phenolic Resin

The rosin-modified phenolic resin to be used in an embodiment of the present invention can be a reaction product of a rosin resin, phenols, formaldehyde, and a polyol.

Examples of the rosin resin include unmodified rosins, such as gum rosin, tall oil rosin, and wood rosin; polymerized rosins derived from unmodified rosins; disproportionation products or hydrides of unmodified rosins or polymerized rosins; and unsaturated carboxylic acid-modified rosins obtained by reacting unmodified rosins or polymerized rosins with unsaturated carboxylic acid.

Examples of the phenols include phenol; and alkylphenols, such as methylphenol (cresol), butylphenol, pentyl cresol, octylphenol, nonylphenol, decylphenol, dodecylphenol, tetradecylphenol, and hexyldecylphenol.

Examples of the formaldehyde include formalin and para-formaldehyde.

Examples of the polyol include diols, such as ethylene glycol, 1,3-propyleneglycol, 1,4-butanediol, 1,6-hexanediol, 3-methyl-1,5-pentanediol; triols, such as glycerin, trimethylolpropane, and trimethylolethane; and tetraols, such as pentaerythritol, diglycerin, ditrimethylolpropane, and ditrimethylolethane.

The used amounts of the rosin resin, the formaldehyde, the phenols, and the polyol are not particularly limited and, for example, can be properly selected taking the desired molecular weight, softening point, and the like into consideration. Furthermore, examples of the reaction method include a method of charging the rosin resin, the phenols/formaldehyde (condensation product), and the polyol all together and allowing the mixture to react. The reaction temperature is typically approximately from 100 to 300°C, and the reaction time is typically approximately from 1 to 24 hours.

The rosin-modified phenolic resin to be used in an embodiment of the present invention needs to have an acid value adjusted to less than 30 mg KOH/g.

The method of adjusting the acid value to less than 30 mg KOH/g is not particularly limited. Examples of a preferred acid value adjustment method include a method of reducing the acid value to less than 30 mg KOH/g by esterifying a rosin-modified phenolic resin prepared as described above or a commercially available rosin-modified phenolic resin (typically having an acid value of 30 mg KOH/g or more). The esterification described above may be performed by an ordinary method and can be performed by using a polyhydric alcohol as an alcohol at a reaction temperature of 150 to 300°C. Because a resin having a low softening point is formed by using a dihydric alcohol such as ethylene glycol, a tri- or higher hydric alcohol is preferably used. The acid value can be adjusted by a charged amount of the alcohol. The rosin-modified phenolic resin prepared by the preferred acid value adjustment method described above can enhance miscibility with a diene rubber and can further enhance the effectiveness of the rosin-modified phenolic resin by allowing an ester bond to be contained in the inside of the rosin-modified phenolic resin.

The acid value of the rosin-modified phenolic resin to be used in an embodiment of the present invention is preferably from 5 to 25 mg KOH/g, and more preferably from 10 to 20 mg KOH/g.

The rosin-modified phenolic resin to be used in an embodiment of the present invention has a weight average molecular weight of preferably from 2000 to 5000, and more preferably from 2500 to 4500, from the perspective of further enhancing the effectiveness of the present invention. Furthermore, the softening point is preferably from 100 to 160°C, and more preferably from 110 to 150°C. The "weight average molecular weight" in the present invention refers to a weight average molecular weight determined by gel permeation chromatography (GPC) based on calibration with polystyrene. Furthermore, the above-mentioned softening point is measured in accordance with JIS K 6220-1.

### Silica

The silica to be used in an embodiment of the present invention has a nitrogen adsorption specific surface area (N₂SA) of 100 to 300 m²/g.

When the N₂SA of the silica is less than 100 m²/g, wet grip performance deteriorates, and strength at break also deteriorates, and thus wear resistance deteriorates.

When the N₂SA of the silica is more than 300 m²/g, processability deteriorates.

A more preferred N₂SA of the silica to be used in an embodiment of the present invention is from 130 to 270 m²/g.

Note that the N₂SA is measured in accordance with JIS K 6217-2.

### Blending Proportion

The rubber composition of an embodiment of the present invention is produced by blending from 1 to 60 parts by mass of a rosin-modified phenolic resin having an acid value of less than 30 mg KOH/g and from 30 to 300 parts by mass of silica having a nitrogen adsorption specific surface area (N₂SA) of 100 to 300 m²/g with 100 parts by mass of a diene rubber.

When the blended amount of the rosin-modified phenolic resin described above is less than 1 part by mass, the effectiveness of the present invention cannot be exhibited because the blended amount is too small. On the other hand, when the blended amount is more than 60 parts by mass, warm-up performance deteriorates and strength at break also deteriorates, and thus wear resistance deteriorates.

The blended amount of the rosin-modified phenolic resin described above is preferably from 5 to 55 parts by mass, and more preferably from 10 to 50 parts by mass, with respect to 100 parts by mass of the diene rubber.

Furthermore, the blended amount of the silica described above is preferably from 50 to 270 parts by mass, and more preferably from 70 to 240 parts by mass, with respect to 100 parts by mass of the diene rubber.

### Silane Coupling Agent

From the perspective of further improving effectiveness of the present invention, the tire rubber composition of an embodiment of the present invention preferably is produced by blending from 2 to 20 mass% of a silane coupling agent in the silica, and in particular, the silane coupling agent is more preferably represented by the following Compositional Formula (2).

(A)ₐ(B)_{b}(C)_{c}(D)_{d}(R1)ₑSiO_{(4-2a-b-c-d-e)/2} (2)

In Formula (2), A represents a divalent organic group having a sulfide group, B represents a monovalent hydrocarbon group having from 5 to 10 carbon atoms, C represents a hydrolyzable group, D represents an organic group having a mercapto group, R1 represents a monovalent hydrocarbon group having from 1 to 4 carbon atoms, and a to e satisfy the relationships: 0 ≤ a < 1, 0 < b < 1, 0 < c < 3, 0 ≤ d < 1, 0 ≤ e < 2, and 0 < 2a + b + c + d + e < 4.

The silane coupling agent (polysiloxane) represented by Formula (2) and the production method thereof are known and described, for example, in WO 2014/002750.

In Formula (2) above, A represents a divalent organic group having a sulfide group. Among these, a group represented by the following Formula (12) is preferable.

^{*}-(CH₂)ₙ-Sₓ-(CH₂)ₙ-^{*} (12)

In Formula (12) above, n represents an integer of 1 to 10, among which an integer of 2 to 4 is preferable.

In Formula (12) above, x represents an integer of 1 to 6, among which an integer of 2 to 4 is preferable.

In Formula (12) above, * indicates a join position.

Specific examples of the group represented by Formula (12) above include ^{*}-CH₂-S₂-CH₂-^{*}, ^{*}-C₂H₄-S₂-C₂H₄-^{*}, ^{*}-C₃H₆-S₂-C₃H₆-^{*}, ^{*}-C₄H₈-S₂-C₄H₈-^{*}, ^{*}-CH₂-S₄-CH₂-^{*}, ^{*}-C₂H₄-S₄-C₂H₄-^{*}, ^{*}-C₃H₆-S₄-C₃H₆-^{*}, and ^{*}-C₄H₈-S₄-C₄H₈-^{*}.

In Formula (2) above, B represents a monovalent hydrocarbon group having from 5 to 20 carbon atoms, and specific examples thereof include a hexyl group, an octyl group, and a decyl group. B is preferably a monovalent hydrocarbon group having from 5 to 10 carbon atoms.

In Formula (2) above, C represents a hydrolyzable group, and specific examples thereof include alkoxy groups, a phenoxy group, a carboxyl group, and alkenyloxy groups. Among these, a group represented by Formula (13) below is preferable.

^{*}-OR² (13)

In Formula (13) above, R² represents an alkyl group having from 1 to 20 carbon atoms, an aryl group having from 6 to 10 carbon atoms, an aralkyl group (aryl alkyl group) having from 6 to 10 carbon atoms, or an alkenyl group having from 2 to 10 carbon atoms, among which an alkyl group having from 1 to 5 carbon atoms is preferable. Specific examples of the alkyl group having from 1 to 20 carbon atoms described above include a methyl group, an ethyl group, a propyl group, a butyl group, a hexyl group, an octyl group, a decyl group, and an octadecyl group. Specific examples of the aryl group having from 6 to 10 carbon atoms described above include a phenyl group and a tolyl group. Specific examples of the aralkyl group having from 6 to 10 carbon atoms described above include a benzyl group and a phenylethyl group. Specific examples of alkenyl groups having from 2 to 10 carbon atoms described above include a vinyl group, a propenyl group, and a pentenyl group.

In Formula (13) above, * indicates a join position.

In Formula (2) above, D is an organic group having a mercapto group. Among these, a group represented by Formula (14) below is preferable.

* -(CH₂)ₘ-SH (14)

In Formula (14) above, m represents an integer of 1 to 10, among which an integer of 1 to 5 is preferable.

In Formula (14) above, * indicates a join position.

Specific examples of the group represented by Formula (14) above include ^{*}-CH₂SH, ^{*}-C₂H₄SH, ^{*}-C₃H₆SH, ^{*}-C₄H₈SH, ^{*}-C₅H₁₀SH, ^{*}-C₆H₁₂SH, ^{*}-C₇H₁₄SH, ^{*}-C₈H₁₆SH, ^{*}-C₉H₁₈SH, and ^{*}-C₁₀H₂₀SH.

In Formula (2) above, R1 represents a monovalent hydrocarbon group having from 1 to 4 carbon atoms.

In Formula (2) above, a to e satisfy the relationships 0 ≤ a < 1, 0 < b < 1, 0 < c < 3, 0 ≤ d < 1, 0 ≤ e < 2, and 0 < 2a + b + c + d + e < 4.

In Formula (2) above, a preferably satisfies 0 < a ≤ 0.50 from the perspective of improving the effectiveness of the present invention.

In Formula (2) above, b preferably satisfies 0 < b, and more preferably 0.10 ≤ b ≤ 0.89, from the perspective of improving the effectiveness of the present invention.

In Formula (2) above, c preferably satisfies 1.2 ≤ c ≤ 2.0 from the perspective of improving the effectiveness of the present invention.

In Formula (2) above, d preferably satisfies 0.1 ≤ d ≤ 0.8 from the perspective of improving the effectiveness of the present invention.

The weight average molecular weight of the polysiloxane described above is preferably from 500 to 2300, and more preferably from 600 to 1500, from the perspective of improving the effectiveness of the present invention. The molecular weight of the polysiloxane described above in an embodiment of the present invention is determined by gel permeation chromatography (GPC) based on calibration with polystyrene using toluene as a solvent.

The mercapto equivalent of the above-mentioned polysiloxane determined by the acetic acid/potassium iodide/potassium iodate addition-sodium thiosulfate solution titration method is preferably from 550 to 700 g/mol, and more preferably from 600 to 650 g/mol, from the perspective of having excellent vulcanization reactivity.

The polysiloxane described above is preferably a polysiloxane having from 2 to 50 siloxane units (-Si-O-) from the perspective of improving the effectiveness of the present invention.

Note that other metals other than a silicon atom (e.g., Sn, Ti, and Al) are not present in the backbone of the polysiloxane described above.

The method of producing the polysiloxane described above is known and, for example, the polysiloxane can be produced in accordance with the method described in WO 2014/002750.

Note that a known silane coupling agent other than the silane coupling agent represented by Formula (2) can also be used, or a combination of the silane coupling agent represented by Formula (2) and another known silane coupling agent can also be used.

### Liquid Aromatic Vinyl-Conjugated Diene Rubber

In the tire rubber composition of an embodiment of the present invention, preferably a liquid aromatic vinyl-conjugated diene rubber having a glass transition temperature (Tg) of -40°C or higher is blended. In such a liquid aromatic vinyl-conjugated, wet grip performance and wear resistance can be enhanced. Furthermore, the liquid aromatic vinyl-conjugated diene rubber is compatible with the diene rubber, enhances dispersibility of the rosin-modified phenolic resin used in an embodiment of the present invention, and can enhance the effectiveness of the present invention.

The liquid aromatic vinyl-conjugated diene rubber is preferably a liquid styrene-butadiene copolymer (liquid SBR). As the liquid SBR, a liquid SBR having a weight average molecular weight of 2000 to 40000, and preferably 3000 to 20000, can be used. Furthermore, the glass transition temperature of the liquid SBR is -40°C or higher as described above, and more preferably from -20°C to -5°C. As the liquid SBR, a commercially available liquid SBR can be used, and examples thereof include RICON 100, available from Cray Valley, and L-SBR 820, available from Kuraray Co., Ltd. Note that, for the Tg in an embodiment of the present invention, a thermogram is measured by differential scanning calorimetry (DSC) at a rate of temperature increase of 20°C/min, and the temperature at the midpoint of the transition region is defined as the glass transition temperature.

Note that the liquid aromatic vinyl-conjugated diene rubber to be used in an embodiment of the present invention is liquid at 23°C. Therefore, it is distinguished from the diene rubber that is solid at this temperature.

Furthermore, the blended amount of the liquid aromatic vinyl-conjugated diene rubber is preferably from 5 to 40 parts by mass, and more preferably from 10 to 30 parts by mass, with respect to 100 parts by mass of the diene rubber.

### Additional Components

The rubber composition in an embodiment of the present invention may contain, in addition to the components described above, vulcanizing or crosslinking agents; vulcanizing or crosslinking accelerators; zinc oxide; various fillers, such as carbon black, clay, talc, calcium carbonate, and aluminum hydroxide; anti-aging agents; plasticizers; and other various additives commonly blended in rubber compositions. The additives are kneaded by a common method to produce a composition that can then be used for vulcanization or crosslinking. The blended amount of such an additive may be any standard blended amount in the related art, so long as the object of the present invention is not hindered. Note that, in a case where aluminum hydroxide is used, the amount of aluminum hydroxide is preferably 10 parts by mass or more, and more preferably from 15 to 70 parts by mass, with respect to 100 parts by mass of the diene rubber.

Because the rubber composition of an embodiment of the present invention enhances wet grip performance, warm-up performance, and strength at break and exhibits excellent processability, the rubber composition can be suitably used for a tread, especially a cap tread, of a tire, and preferably used for a tread, especially a cap tread, of a racing tire. The tire of an embodiment of the present invention is preferably a pneumatic tire, and can be inflated with air, an inert gas such as nitrogen, or another gas.

### Example

The present invention will be described below in further detail by way of Examples and Comparative Examples, but the present invention is not limited to these examples.

### Standard Example 1, Examples 1 to 7, and Comparative Examples 1 to 5

### Preparation of Sample

For the composition (part by mass) listed in Table 1, the components other than the vulcanization accelerators and sulfur were kneaded for 5 minutes in a 1.7-L sealed Banbury mixer. The rubber was then discharged outside of the mixer and cooled at room temperature. Thereafter, the rubber was placed in an identical mixer again, and the vulcanization accelerators and sulfur were then added to the mixture and further roll-kneaded to produce a rubber composition. Next, the resulting rubber composition was pressure-vulcanized in a predetermined mold at 160°C for 20 minutes to produce a vulcanized rubber test piece, and then the test methods shown below were used to measure the physical properties of the vulcanized rubber test piece.

Wet grip performance: tan δ (0°C) was measured at an elongation deformation strain of 10 ± 2%, a vibration frequency of 20 Hz, and a temperature of 0°C, using a viscoelastic spectrometer (available from Toyo Seiki Seisaku-sho, Ltd.) in accordance with JIS K 6394:2007. The results are expressed as index values with Standard Example 1 being assigned the value of 100. A larger index value indicates better wet grip performance.

Hardness (20°C): measured at 20°C in accordance with JIS K 6253. The results were expressed as index values with Standard Example 1 being assigned the value of 100. A smaller index value indicates superior warm-up performance.

Strength at break: In accordance with JIS K 6251, a dumbbell-shaped No. 3 sample piece was punched out from the above-mentioned vulcanized rubber test piece and subjected to a tensile test at a tensile speed of 500 mm/min, and the elongation at break (%) was measured. The results were expressed as index values with Standard Example 1 being assigned the value of 100. A larger index value indicates superior strength at break and better wear resistance.

Processability: Adhesion during roll-kneading was evaluated based on the following criteria.
○: The rubber was peeled off without application of a force, and no rubber remained on the roll.
△: The rubber needed to be peeled off by application of a force but no rubber remained on the roll.
×: The rubber needed to be peeled off by application of a force, and the rubber remained on the roll.

The results are shown in Table 1.

**Table 1**

| | Standard Example 1 | Comparative Example 1 | Comparative Example 2 | Comparative Example 3 | Example 1 | Example 2 | Example 3 | Example 4 | Example 5 | Example 6 | Example 7 | Comparative Example 4 | Comparative Example 5 |
|---|---|---|---|---|---|---|---|---|---|---|---|---|---|
| SBR *1 | 137.5 | 137.5 | 137.5 | 137.5 | 137.5 | 137.5 | 137.5 | 137.5 | 137.5 | 137.5 | 137.5 | 137.5 | 137.5 |
| Silica 1 *2 | 70.0 | 70.0 | 70.0 | 70.0 | 70.0 | 70.0 | 70.0 | 70.0 | 70.0 | 70.0 | 70.0 | - | 70.0 |
| Silica 2 *3 | - | - | - | - | - | - | - | - | - | - | - | 70.0 | - |
| Carbon black *4 | 10.0 | 10.0 | 10.0 | 10.0 | 10.0 | 10.0 | 10.0 | 10.0 | 10.0 | 10.0 | 10.0 | 10.0 | 10.0 |
| Aluminum hydroxide *5 | - | - | - | - | - | - | - | 20.0 | - | - | - | - | - |
| Resin 1 *6 | 30.0 | - | - | - | - | - | - | - | - | - | - | - | - |
| Resin 2 *7 | - | 30.0 | - | - | - | - | - | - | - | - | - | - | - |
| Resin 3 *8 | - | - | 30.0 | - | - | - | - | - | - | - | - | - | - |
| Resin 4 *9 | - | - | - | 30.0 | - | - | - | - | - | - | - | - | - |
| Resin 5 *10 | - | - | - | - | 30.0 | 30.0 | 30.0 | 30.0 | - | 55.0 | 30.0 | 30.0 | 70.0 |
| Resin 6 *11 | - | - | - | - | - | - | - | - | 30.0 | - | - | - | - |
| Silane coupling agent 1 *12 | 5.6 | 5.6 | 5.6 | 5.6 | 5.6 | - | - | - | 5.6 | 5.6 | 2.8 | 5.6 | 5.6 |
| Silane coupling agent 2 *13 | - | - | - | - | - | 5.6 | 5.6 | 5.6 | - | - | 2.8 | - | - |
| Liquid SBR *14 14 | - | - | - | - | - | - | 20.0 | 20.0 | - | - | - | - | - |
| Oil *15 | 20.0 | 20.0 | 20.0 | 20.0 | 20.0 | 20.0 | - | - | 20.0 | 20.0 | 20.0 | 20.0 | 20.0 |
| Stearic acid *16 | 2.0 | 2.0 | 2.0 | 2.0 | 2.0 | 2.0 | 2.0 | 2.0 | 2.0 | 2.0 | 2.0 | 2.0 | 2.0 |
| Zinc oxide *17 | 2.0 | 2.0 | 2.0 | 2.0 | 2.0 | 2.0 | 2.0 | 2.0 | 2.0 | 2.0 | 2.0 | 2.0 | 2.0 |
| Anti-aging agent *18 | 2.0 | 2.0 | 2.0 | 2.0 | 2.0 | 2.0 | 2.0 | 2.0 | 2.0 | 2.0 | 2.0 | 2.0 | 2.0 |
| Vulcanization accelerator 1 *19 | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator 2 *20 | 2.0 | 2.0 | 2.0 | 2.0 | 2.0 | 2.0 | 2.0 | 2.0 | 2.0 | 2.0 | 2.0 | 2.0 | 2.0 |
| Sulfur *21 | 1.5 | 1.5 | 1.5 | 1.5 | 1.5 | 1.5 | 1.5 | 1.5 | 1.5 | 1.5 | 1.5 | 1.5 | 1.5 |
| Measurement result | | | | | | | | | | | | | |
| Wet grip performance (tan δ (0°C)) | 100 | 97 | 105 | 98 | 102 | 108 | 111 | 117 | 101 | 106 | *105* | 98 | 108 |
| Warm-up performance (hardness (20°C)) | 100 | 97 | 106 | 105 | 98 | 95 | 96 | 96 | 99 | 99 | 97 | 94 | 103 |
| Strength at break | 100 | 107 | 121 | 123 | 113 | 112 | 115 | 110 | 114 | 100 | 113 | 95 | 92 |
| Processability | △ | × | ○ | ○ | ○ | ○ | △ | △ | ○ | △ | ○ | △ | △ |

| | | | | | | | | | | | | | |
|---|---|---|---|---|---|---|---|---|---|---|---|---|---|
| *1: SBR (Nipol NS522, available from ZS Elastomer Co., Ltd.) *2: Silica 1 (Ultrasil 7000 GR, available from Evonik Industries AG (N₂SA = 171 m²/g) *3: Silica 2 (Zeosil 1085GR, available from Solvay; N₂SA = 86 m²/g) *4: Carbon black (SEAST 9, available from Tokai Carbon Co., Ltd.) *5: Aluminum hydroxide (BF013, available from Nippon Light Metal Co., Ltd.) *6: Resin 1 (YS POLYSTER S145, available from Yasuhara Chemical Co., Ltd.; phenol-modified terpene resin; acid value = 0 mg KOH/g) *7: Resin 2 (Tamanol 803L, available from Arakawa Chemical Industries, Ltd.; rosin-modified phenolic resin; acid value = 52 mg KOH/g) *8: Resin 3 (MALKYD No. 5, available from Arakawa Chemical Industries, Ltd.; maleic acid-modified rosin resin; acid value = 19 mg KOH/g) *9: Resin 4 (PENSEL KK, available from Arakawa Chemical Industries, Ltd.; rosin ester resin; acid value = 19 mg KOH/g) *10: Resin 5 (rosin-modified phenolic resin; reaction product of a rosin, phenols, formaldehyde, and a polyol; acid value = 15 mg KOH/g) *11: Resin 6 (rosin-modified phenolic resin; reaction product of a rosin, phenols, formaldehyde, and a polyol; acid value = 17 mg KOH/g) *12: Silane coupling agent 1 (Si69, available from Evonik Industries AG) *13: Silane coupling agent 2 (silane coupling agent which was prepared by the production method described in WO 2014/002750 and satisfied the above-mentioned Compositional Formula (2). Compositional Formula = (-C₃H₆-S₄-C₃H₆-)_{0.083}(-C₈H₁₇)_{0.667}(-OC₂H₅)_{1.50}(-C₃H₆SH)_{0.167}SiO_{0.75}; average molecular weight = 860) *14: Liquid SBR (RICON 100, available from Cray Valley; weight average molecular weight = 6400; Tg = -15°C) *15: Oil (Extract No. 4S, available from Showa Shell Sekiyu K.K.) *16: Stearic acid (Beads Stearic Acid YR, available from NOF Corporation) *17: Zinc oxide (Zinc Oxide III, available from Seido Chemical Industry Co., Ltd.) *18: Anti-aging agent (6PPD, available from Flexsys) *19: Vulcanization accelerator 1 (SANCELER D-G, available from Sanshin Chemical Industry Co., Ltd.) *20: Vulcanization accelerator 2 (NOCCELER CZ-G, available from Ouchi Shinko Chemical Industrial Co., Ltd.) *21: Sulfur (Golden Flower oil treated sulfur powder, available from Tsurumi Chemical Industry Co., Ltd.) | | | | | | | | | | | | | |

The results of Table 1 shows that, in each of the rubber compositions of Examples, from 1 to 60 parts by mass of the rosin-modified phenolic resin having an acid value of less than 30 mg KOH/g and from 30 to 300 parts by mass of the silica having a nitrogen adsorption specific surface area (N₂SA) of 100 to 300 m²/g are blended with 100 parts by mass of the diene rubber, and thus, wet grip performance, warm-up performance, and strength at break were improved and processability was superior, compared to those of Standard Example 1.

On the other hand, because Comparative Example 1 had the acid value of the rosin-modified phenolic resin exceeding the upper limit stipulated in the present invention, wet grip performance deteriorated.

Because Comparative Example 2 was an example using the maleic acid-modified rosin resin, warm-up performance deteriorated.

Because Comparative Example 3 was an example using the rosin ester resin, wet grip performance and warm-up performance deteriorated.

Because Comparative Example 4 had the nitrogen adsorption specific surface area (N₂SA) of the silica, which was less than the lower limit stipulated in the present invention, warm-up performance and strength at break deteriorated.

Because Comparative Example 5 had the blended amount of the rosin-modified phenolic resin exceeding the upper limit stipulated in the present invention, warm-up performance and strength at break deteriorated.

The present disclosure includes the following inventions.
Invention [1]: A tire rubber composition containing:
   a diene rubber;
   from 1 to 60 parts by mass of a rosin-modified phenolic resin having an acid value of less than 30 mg KOH/g with respect to 100 parts by mass of the diene rubber; and
   from 30 to 300 parts by mass of silica having a nitrogen adsorption specific surface area (N₂SA) of 100 to 300 m²/g with respect to 100 parts by mass of the diene rubber.
Invention [2]: The tire rubber composition according to Invention [1], wherein
   from 2 to 20 mass% of a silane coupling agent is further blended in the silica, and
   the silane coupling agent is represented by Compositional Formula (2):

      (A)ₐ(B)_{b}(C)_{c}(D)_{d}(R1)ₑSiO_{(4-2a-b-c-d-e)/2} (2)
   where
   A represents a divalent organic group having a sulfide group,
   B represents a monovalent hydrocarbon group having from 5 to 10 carbon atoms,
   C represents a hydrolyzable group,
   D represents an organic group having a mercapto group,
   R1 represents a monovalent hydrocarbon group having from 1 to 4 carbon atoms, and
   a to e satisfy the relationships: 0 ≤ a < 1, 0 < b < 1, 0 < c < 3, 0 ≤ d < 1, 0 ≤ e < 2, and 0 < 2a + b + c + d + e < 4.
Invention [3]: The rubber composition according to Invention [1] or [2], further containing a liquid aromatic vinyl-conjugated diene rubber having a glass transition temperature (Tg) of -40°C or higher.
Invention [4]: The rubber composition according to any one of Inventions [1] to [3], further containing 10 parts by mass or more of aluminum hydroxide with respect to 100 parts by mass of the diene rubber.
Invention [5]: The tire rubber composition according to any one of Inventions [1] to [4], wherein the diene rubber consists of a styrene-butadiene copolymer rubber.
Invention [6]: The tire rubber composition according to any one of Inventions [1] to [5], wherein the acid value of the rosin-modified phenolic resin is from 5 to 25 mg KOH/g.
Invention [7]: The tire rubber composition according to Invention [3], wherein the liquid aromatic vinyl-conjugated diene rubber is a liquid styrene-butadiene copolymer having a weight average molecular weight of 2000 to 40000.
Invention [8]: The tire rubber composition according to Invention [3], wherein the glass transition temperature (Tg) of the liquid aromatic vinyl-conjugated diene rubber is from -20°C to -5°C.
Invention [9]: A tire containing the tire rubber composition according to any one of Inventions [1] to [8] in a cap tread.

## Claims

1. A tire rubber composition comprising:
a diene rubber;
from 1 to 60 parts by mass of a rosin-modified phenolic resin having an acid value of less than 30 mg KOH/g with respect to 100 parts by mass of the diene rubber; and
from 30 to 300 parts by mass of silica having a nitrogen adsorption specific surface area (N₂SA) of 100 to 300 m²/g with respect to 100 parts by mass of the diene rubber.

2. The tire rubber composition according to claim 1, wherein
from 2 to 20 mass% of a silane coupling agent is further blended in the silica, and
the silane coupling agent is represented by Compositional Formula (2):
(A)ₐ(B)_{b}(C)_{c}(D)_{d}(R1)ₑSiO_{(4-2a-b-c-d-e)/2} (2)
where
A represents a divalent organic group having a sulfide group,
B represents a monovalent hydrocarbon group having from 5 to 10 carbon atoms,
C represents a hydrolyzable group,
D represents an organic group having a mercapto group,
R1 represents a monovalent hydrocarbon group having from 1 to 4 carbon atoms, and
a to e satisfy the relationships: 0 ≤ a < 1, 0 < b < 1, 0 < c < 3, 0 ≤ d < 1, 0 ≤ e < 2, and 0 < 2a + b + c + d + e < 4.

3. The tire rubber composition according to claim 1, further comprising a liquid aromatic vinyl-conjugated diene rubber having a glass transition temperature (Tg) of -40°C or higher.

4. The tire rubber composition according to claim 1, further comprising 10 parts by mass or more of aluminum hydroxide with respect to 100 parts by mass of the diene rubber.

5. The tire rubber composition according to claim 1, wherein the diene rubber consists of a styrene-butadiene copolymer rubber.

6. The tire rubber composition according to claim 1, wherein the acid value of the rosin-modified phenolic resin is from 5 to 25 mg KOH/g.

7. The tire rubber composition according to claim 3, wherein the liquid aromatic vinyl-conjugated diene rubber is a liquid styrene-butadiene copolymer having a weight average molecular weight of 2000 to 40000.

8. The tire rubber composition according to claim 3, wherein the glass transition temperature (Tg) of the liquid aromatic vinyl-conjugated diene rubber is from -20°C to -5°C.

9. A tire comprising the tire rubber composition according to claim 1 in a cap tread.
